# EUROPÄISCHE PATENTSCHRIFT

(11) **EP 3 161 509 B1**
(45) Veröffentlichungstag und Bekanntmachung des Hinweises auf die Patenterteilung: **30.03.2022**
(21) Anmeldenummer: 15732227.2
(22) Anmeldetag: 25.06.2015
(51) Int. Cl.: G01S 7/03, G01S 7/02, G01S 13/931, H01Q 1/32, H01Q 17/00

(54) **RADARSENSORVORRICHTUNG FÜR EIN KRAFTFAHRZEUG, FAHRERASSISTENZSYSTEM UND KRAFTFAHRZEUG**
RADAR SENSOR DEVICE FOR A MOTOR VEHICLE, DRIVER ASSISTANCE SYSTEM, AND MOTOR VEHICLE
DISPOSITIF DE CAPTEUR RADAR POUR UN VÉHICULE AUTOMOBILE, SYSTÈME D'ASSISTANCE AU CONDUCTEUR ET VÉHICULE AUTOMOBILE

(30) Priorität: 30.06.2014 DE 102014109105
(43) Veröffentlichungstag der Anmeldung: 03.05.2017
(73) Patentinhaber: Valeo Schalter und Sensoren GmbH, 74321 Bietigheim-Bissingen (DE)
(72) Erfinder: PAPZINER, Uwe, 74321 Bietigheim-Bissingen (DE); LANG, Harald, 71686 Remseck (DE)
(74) Vertreter: Withopf, Kristina
(86) Internationale Anmeldenummer: PCT/EP2015/064397
(87) Internationale Veröffentlichungsnummer: WO 2016/001058

(56) Entgegenhaltungen:
- DE-A1-102011 122 346
- DE-T2- 60 110 271
- DE-T2-602004 000 722
- DE-T5-112012 001 758

## Beschreibung

Die Erfindung betrifft eine Radarsensorvorrichtung für ein Kraftfahrzeug zur Detektion von einem Objekt in einem Umgebungsbereich des Kraftfahrzeugs mit einem Radarsensor, welcher dazu ausgelegt ist, zur Detektion des Objekts eine elektromagnetische Welle auszusenden und die von dem Objekt reflektierte elektromagnetische Welle in einem vorbestimmten Sichtbereich des Radarsensors zu empfangen, mit einem Gehäuse, in welchem der Radarsensor zumindest bereichsweise angeordnet ist und mit einer Abschirmeinrichtung, welche dazu ausgelegt ist, Störwellen, welche durch die reflektierten elektromagnetischen Wellen außerhalb des vorbestimmten Sichtbereichs gebildet sind, von dem Radarsensor abzuschirmen. Die Erfindung betrifft außerdem ein Fahrerassistenzsystem mit einer derartigen Radarsensorvorrichtung sowie ein Kraftfahrzeug mit einem derartigen Fahrerassistenzsystem.

Radarsensorvorrichtungen für Kraftfahrzeuge sind bereits Stand der Technik. Solche Radarsensorvorrichtungen dienen im Allgemeinen zur Detektion von Objekten in einem Umgebungsbereich des Kraftfahrzeugs. Zur Detektion des Objekts sendet die Radarsensorvorrichtung elektromagnetische Wellen aus, die dann an dem zu detektierenden Objekt reflektiert werden und als reflektierte elektromagnetische Welle empfangen werden. Radarsensorvorrichtungen messen den Abstand zwischen dem Objekt und dem Kraftfahrzeug anhand einer Laufzeit der elektromagnetischen Welle. Sie können zudem sowohl die Relativgeschwindigkeit zu dem Objekt als auch den Winkel, das heißt den Winkel zwischen einer gedachten Verbindungslinie zum Objekt und einer Referenzlinie, etwa der Fahrzeuglängsachse, messen.

Mit einem Radarsensor wird in horizontaler Richtung üblicherweise ein relativ breiter azimutaler Winkelbereich abgetastet, welcher beispielsweise 150°betragen kann.

Anhand des azimutalen Erfassungswinkels kann ein vorbestimmter Sichtbereich des Radarsensors definiert werden. Der vorbestimmte Sichtbereich ist in der Regel bezüglich einer senkrecht zur vorderen Sensorfläche verlaufenden Radarachse symmetrisch, so dass der vorbestimmte Sichtbereich von beispielsweise -75°bis +75°bezüglich der Radarachse betragen kann. Der vorbestimmte Sichtbereich kann in kleinere Teilbereiche unterteilt sein, welche einer nach dem anderen durch den Radarsensor erfasst werden.

Zu diesem Zweck kann beispielsweise die Hauptkeule der Sendeantenne elektronisch in Azimutrichtung verschwenkt werden, beispielsweise nach dem sogenannten Phased Array Prinzip. Eine andere Möglichkeit ist die sektorweise Richtungsumschaltung der Hauptkeule der Sendeantenne über ein Phasennetzwerk.

Radarsensorvorrichtungen werden üblicherweise verdeckt hinter dem Stoßfänger des Kraftfahrzeugs platziert, beispielsweise in den jeweiligen Eckbereichen des Stoßfängers. Die Ausbreitung der elektromagnetischen Welle erfolgt dabei durch das Material des Stoßfängers hindurch. Wird nun die Radarsensorvorrichtung in ein Kraftfahrzeug eingebaut, so beeinflusst der Stoßfänger die Ausbreitung der elektromagnetischen Wellen, und zwar sowohl der ausgesendeten elektromagnetischen Wellen als auch der am Objekt reflektierten und auf den Radarsensor einfallenden elektromagnetischen Wellen. Bei einer derart eingebauten Radarsensorvorrichtung ist außerdem problematisch, dass gesendete und empfangene elektromagnetische Wellen an metallischen und dielektrischen Gegenständen reflektiert werden. Durch Reflektionen an metallischen Strukturen des Kraftfahrzeugs kommt es zu störenden Überlagerungen der Radarsignale und die Messwerte können verfälscht werden.

Bei einem eingebauten Radarsensor ergibt sich eine Phasencharakteristik, bei welcher eine Differenzphasenkurve infolge der Überlagerung der Mehrfachreflektionen sogenannte unerwünschte Rippel aufweist. Die Differenzphasenkurve definiert die Abhängigkeit des Winkels von einer Phasendifferenz. Die Phasendifferenz wird von der Phase eines ersten Empfangssignals einer ersten Antenne und der Phase eines zweiten Empfangssignals einer anderen zweiten Antenne bestimmt. Die Rippel entstehen aufgrund von Störwellen, welche an Fahrzeugteilen reflektieren und als Sekundärstrahlung von außerhalb des azimutalen Erfassungswinkels beziehungsweise des vorbestimmten Sichtbereichs in den Empfangsbereich des Radarsensors gelangen. Ein Großteil dieser Störwellen resultiert aus sogenannten Mehrfachreflektionen der elektromagnetischen Welle, die aus dem Stoßfängerbereich und aus dem Kofferraumbereich des Fahrzeugs entstehen und somit vom rückwärtigen Bauraum des Radarsensors in den Messbereich der Empfangsantennenanordnung zurückgelangen. Hierdurch kommt es zu Interferenzen mit den ursprünglich reflektierten elektromagnetischen Wellen, die auf direktem Weg von den Objekten in die Empfangsantenne gelangen.

Eine Abhilfe gegen die Störwellen schafft beispielsweise die Verwendung eines Absorptionsmaterials für elektromagnetische Wellen. In diesem Zusammenhang beschreibt die WO 2014/037194 A1 einen Radarsensor, der hinter einem Verkleidungsteil eines Kraftfahrzeugs angeordnet ist. Hier ist ein solches Absorptionsmaterial an einem Verkleidungsteil, beispielsweise einen Stoßfänger, aufgebracht und absorbiert Störwellen außerhalb eines azimutalen Erfassungswinkels. Weiterhin kann ein Absorptionselement zur Absorption der Störwellen vorgesehen sein, das einerseits an einem Randbereich eines Radoms des Radarsensors und andererseits an dem Absorptionsmaterial anliegt.

Eine weitere Abhilfe kann ein sogenanntes Absorber Shield schaffen. Das Absorber Shield ist ein Bauteil, welches den Radarsensor teilweise umgibt. Das Absorber Shield weist die Eigenschaft auf, elektromagnetische Wellen absorbieren zu können. Es verhindert somit, dass reflektierte elektromagnetische Wellen außerhalb des vorbestimmten Sichtbereichs auf den Radarsensor treffen. Ein solches Absorber Shield kann beispielsweise aus einem Kunststoff gebildet sein, der mit Kohlenstoff gefüllt ist.

DE102011122346A1 offenbart ein Radargehäuse mit einer umlaufenden Abschirmeinrichtung; DE60110271T2 offenbart ein Radargehäuse mit einer einteilig, einseitig angefügten Abschirmeinrichtung; DE602004000722T2 offenbart ein Absorbermaterial das einteilig mit einer Radarkuppel (oder Radome) ausgebildet ist; DE112012001758T5 offenbart ein Radargehäuse mit einer umlaufenden Abschirmeinrichtung.

Es ist Aufgabe der Erfindung, eine Lösung aufzuzeigen, wie bei einer Radarsensorvorrichtung der eingangs genannten Gattung der Einfluss von Störwellen auf die Funktionsweise des Radarsensors im Vergleich zum Stand der Technik mit geringerem Aufwand reduziert werden kann.

Diese Aufgabe wird erfindungsgemäß durch eine Radarsensorvorrichtung, durch ein Fahrerassistenzsystem, wie auch durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Radarsensorvorrichtung für ein Kraftfahrzeug zur Detektion von einem Objekt in einem Umgebungsbereich des Kraftfahrzeugs umfasst einen Radarsensor, welcher dazu ausgelegt ist, zur Detektion des Objekts eine elektromagnetische Welle auszusenden und die von dem Objekt reflektierte elektromagnetische Welle in einem vorbestimmten Sichtbereich des Radarsensors zu empfangen, ein Gehäuse, in welchem der Radarsensor zumindest bereichsweise angeordnet ist und eine Abschirmeinrichtung, welche dazu ausgelegt ist, Störwellen, welche durch die reflektierten elektromagnetischen Wellen außerhalb des vorbestimmten Sichtbereichs gebildet sind, von dem Radarsensor abzuschirmen. Erfindungsgemäß ist vorgesehen, dass das Gehäuse einteilig ausgebildet ist und die Abschirmeinrichtung zumindest einen Teil des Gehäuses bildet.

Anstelle der Verwendung und Montage einer zusätzlichen Abschirmeinrichtung bei der Fahrzeugintegration der Radarsensorvorrichtung kann nun die Funktion der Unterdrückung der Störwellen durch das Gehäuse selbst ermöglicht werden. Vorliegend bildet die Abschirmeinrichtung einen Teil des Gehäuses für den Radarsensor.

Die Abschirmeinrichtung ist einteilig mit dem Gehäuse ausgebildet . In diesem Fall kann das komplette Gehäuse als Abschirmeinrichtung dienen. Das Gehäuse ist vorliegend einteilig ausgebildet. Dabei kann es vorgesehen sein, dass Teile des Gehäuses als Abschirmeinrichtung dienen und die anderen Teile des Gehäuses nicht als Abschirmeinrichtung dienen. Das Gehäuse kann beispielsweise mittels eines Spritzgussverfahrens hergestellt sein.

Somit wird durch ein entsprechendes Gehäusedesign die Abschirmeinrichtung in das Gehäuse integriert. Im Gegensatz zum Stand der Technik ist es nicht notwendig, separate Abschirmeinrichtungen, wie beispielsweise einen Absorber Shield, an dem Radarsensor oder dem Kraftfahrzeug anzubringen. Die erfindungsgemäße Radarsensorvorrichtung ermöglicht also, den Radarsensor derart abzuschirmen, dass dieser bevorzugt die von dem Objekt reflektierte elektromagnetische Welle innerhalb des vorbestimmten Sichtbereichs empfängt. Die Störwellen, welche beispielsweise durch Mehrfachreflektion an Karosserieteilen des Kraftfahrzeugs entstehen, werden durch die Abschirmeinrichtung des Gehäuses abgeschirmt beziehungsweise von dem Radarsensor ferngehalten. Die Bildung von Rippeln in der Differenzphase der Sensorsignale kann damit verhindert werden.

Vorzugsweise ist vorgesehen, dass das Gehäuse einen ersten Gehäusebereich zum Aufnehmen des Radarsensors und einen zweiten Gehäusebereich, der die Abschirmeinrichtung bildet, aufweist. Das Gehäuse dient somit einerseits zum Halten des Radarsensors und andererseits zum Abschirmen der Störwellen von dem Radarsensor. Zudem ist an dieser Ausgestaltung vorteilhaft, dass die Aufnahme des Radarsensors in das Gehäuse ungehindert von der Abschirmeinrichtung erfolgen kann.

Insbesondere erstreckt sich der zweite Gehäusebereich im Wesentlichen entlang einer Haupterstreckungsrichtung des Radarsensors. Mit anderen Worten kann die Abschirmeinrichtung im Wesentlichen in einer Ebenen mit einem Radarsensor angeordnet sein. Die Haupterstreckungsrichtung des Radarsensors kann einer Haupterstreckungsrichtung eines Trägerelements bzw. einer Leiterplatte des Radarsensors, auf welcher die Radarantennen des Radarsensors angeordnet sind, entsprechen. Diese Haupterstreckungsrichtung kann beispielsweise senkrecht zu der Längsachse des Kraftfahrzeugs verlaufen. Somit wäre die Fahrzeuglängsachse gleichzeitig die Radarachse beziehungsweise die Mittelachse des vorbestimmten Sichtbereichs. Das Ziel der Abschirmeinrichtung entlang der Haupterstreckungsrichtung ist insbesondere das Abschirmen von neben dem vorbestimmten Sichtbereichs einfallende Störwellen abzuschirmen.

Es ist zudem vorgesehen, dass der zweite Gehäusebereich als ein Befestigungselement zur Befestigung der Radarsensorvorrichtung an dem Kraftfahrzeug ausgebildet ist. Hierbei dient die Abschirmeinrichtung auch dazu , ein Befestigungselement zur Befestigung der Radarsensorvorrichtung an dem Kraftfahrzeug zur Verfügung zu stellen. So stellt der zweite Gehäusebereich die Funktion der Abschirmeinrichtung und die Funktion des Befestigungselements bereit. Das Kombinieren dieser Funktionen spart Bauteile ein und reduziert den Aufwand bei der Montage. Die Befestigungselemente beziehungsweise Befestigungslaschen sind als Verlängerung der Abschirmeinrichtung ausgebildet .

Das Befestigungselement kann beispielsweise ein Schraubloch zur Aufnahme einer Schraube umfassen. Insbesondere ist vorgesehen, dass die Abschirmeinrichtung derart zu dem Radarsensor positioniert ist, dass diese die Störwellen, welche auf die Abschirmeinrichtung treffen, von dem Radarsensor weg lenkt. Das bedeutet, dass die Abschirmeinrichtung derart an dem Radarsensor angeordnet ist, dass diese die Störwellen so reflektiert, dass diese nicht zu dem Radarsensor gelenkt werden. Dies kann beispielsweise dadurch realisiert werden, dass die Abschirmeinrichtung in der Ebene der Antennen, insbesondere der Empfangsantennen, des Radarsensors angebracht beziehungsweise positioniert wird. Somit kann auf einfache Weise verhindert werden, dass Störwellen von dem Radarsensor bzw. der Empfangsantenne des Radarsensors empfangen werden.

Die Abschirmeinrichtung ist derart geformt, dass diese die Störwellen, welche auf die Abschirmeinrichtung treffen, von dem Radarsensor weg lenkt. Das bedeutet, die Form der Abschirmeinrichtung ist derart ausgelegt, dass die Störwellen von dem Radarsensor weggelenkt beziehungsweise abgelenkt werden. So kann beispielsweise die Form der Abschirmeinrichtung so ausgebildet sein, dass ein Normalenvektor auf jeder Stelle der Oberfläche der Abschirmeinrichtung von dem Radarsensor weg zeigt. Das Gehäuse kann so ausgebildet sein, dass die Abschirmeinrichtung einen vorbestimmten Winkel zu der Haupterstreckungsrichtung des Radarsensors aufweist.

Die Abschirmeinrichtung weist eine vorbestimmte Krümmung auf. Das bedeutet, dass die Abschirmeinrichtung derart geformt sein kann, dass die Störwellen, die auf die Abschirmeinrichtung treffen, von dem Radarsensor weg gelenkt werden. Die Krümmung kann beispielsweise so ausgebildet sein, dass der Normalenvektor der Flächen der Abschirmeinrichtung von dem Radarsensor weg zeigt. Dadurch, dass die Ablenkeinrichtung zumindest in einem Bereich eine vorbestimmte Krümmung aufweist, können Störwellen besonders effektiv abgelenkt werden.

In einer weiteren Ausführungsform ist die Abschirmeinrichtung dazu ausgelegt, die Störwellen, welche auf die Abschirmeinrichtung treffen, zu absorbieren. Die Abschirmeinrichtung kann einerseits die Störwellen ablenken und anderseits die Störwellen absorbieren. Der Vorteil der absorbierenden Abschirmeinrichtung beziehungsweise des absorbierenden Materials der Abschirmeinrichtung ist, dass die Störwellen, welche nicht vollständig von der Abschirmeinrichtung abgelenkt werden, absorbiert werden können. Somit kann der Radarsensor besonders zuverlässig vor Störwellen geschützt werden.

Insbesondere ist die Abschirmeinrichtung aus einem mit Kohlenstoff gefüllten Kunststoff gebildet. Das Material kann einen Kunststoff umfassen, in dem gleichmäßig verteilt Kohlenstoffpartikel angeordnet sind. Unter einem Material, welches die elektromagnetischen Wellen im Bereich der Betriebsfrequenz des Radarsensors vollständig oder annähernd vollständig absorbiert, sind auch Materialien bekannt, welche die Bezeichnung Radar Absorbent Material (RAM) führen. Der Vorteil ist, dass somit schon bei der Herstellung des Gehäuses mit der Auswahl des Materials für das Gehäuse die absorbierende Eigenschaft bereitgestellt werden kann.

In einer weiteren Ausführungsform ist die Radarsensorvorrichtung dazu ausgelegt, eine relative Position zwischen dem Kraftfahrzeug und dem Objekt anhand der von dem Objekt reflektierten elektromagnetischen Welle zu bestimmen. Dadurch, dass der Empfang von Störwellen in Folge von Mehrfachreflexionen verhindert oder reduziert wird, kann der Abstand zwischen dem Objekt und dem Kraftfahrzeug und/oder ein Objektwinkel zwischen einer gedachten Verbindungslinie zu dem Objekt und einer Referenzlinie etwa der Fahrzeuglängsachse zuverlässiger bestimmt werden kann.

Weiterhin ist vorgesehen, dass der Radarsensor zumindest eine Sendeantenne zum Senden der elektromagnetischen Welle und zumindest eine Empfangsantenne zum Empfangen der von dem Objekt reflektierten elektromagnetischen Welle umfasst. Die Empfangsantenne kann im Vergleich zur Sendeantenne eine höhere Empfindlichkeit beim Empfangen der elektromagnetischen Welle aufweisen. Dies kann zu einer präziseren Bestimmung des Abstandes beziehungsweise des Winkels zu dem Objekt führen. Weiterhin kann somit auch ein Dauerstrichradargerät durch den Radarsensor bereitgestellt werden.

Insbesondere ist vorgesehen, dass die Abschirmeinrichtung derart ausgelegt ist, dass die zumindest eine Empfangsantenne durch die Abschirmeinrichtung von den Störwellen abgeschirmt ist. Somit ist durch die Abschirmeinrichtung zumindest die Empfangsantenne vor der Störstrahlung beziehungsweise der Störwelle geschützt. Dies hat den Vorteil, dass in dem Fall von Herstellungskosten und/oder Materialkostenersparnis und/oder Baugrößenreduzierung ausschließlich die Empfangsantenne abgeschirmt werden kann. Weiterhin kann dadurch ein Ablenken der elektromagnetischen Welle von der Sendeantenne hin zu der Empfangsantenne durch das Gehäuse beziehungsweise die Abschirmeinrichtung verhindert werden.

Ein erfindungsgemäßes Fahrerassistenzsystem umfasst eine erfindungsgemäße Radarsensorvorrichtung. Das Fahrerassistenzsystem kann beispielsweise als zur Abstandswarnung, zur Abstandsregelung, zur Überwachung des toten Winkels, als Spurwechselassistent und/oder als Einpark- bzw. Ausparkhilfe dienen.

Ein erfindungsgemäßes Kraftfahrzeug, insbesondere ein Personenkraftwagen, umfasst ein erfindungsgemäßes Fahrerassistenzsystem.

In einer Ausführungsform ist die Radarsensorvorrichtung an einem Chassis angeordnet. Dies hat den Vorteil, dass die Radarsensorvorrichtung unmittelbar mit dem Kraftfahrzeug verbunden ist und die Radarsensorvorrichtung besonders effektiv betrieben werden kann.

Die mit Bezug auf die erfindungsgemäße Radarsensorvorrichtung vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Ausführungsbeispiele der Erfindung werden nachfolgend anhand schematischer Zeichnungen näher erläutert:
Dabei zeigen:
- Fig. 1: in schematischer Draufsicht ein Ausführungsbeispiel eines erfindungsgemäßen Kraftfahrzeugs mit einer Radarsensorvorrichtung gemäß einer ersten Ausführungsform;
- Fig. 2: in schematischer Darstellung eine Draufsicht auf die Radarsensorvorrichtung, die einen Radarsensor und ein Gehäuse mit integrierter Abschirmeinrichtung aufweist;
- Fig. 3: in schematischer Darstellung der Radarsensorvorrichtung mit der Abschirmeinrichtung in einer Perspektivansicht;
- Fig. 4: in schematischer Darstellung die Radarsensorvorrichtung in einer Seitenansicht;
- Fig. 5: in schematischer Darstellung die Radarsensorvorrichtung, welche an dem Kraftfahrzeug angeordnet ist;
- Fig. 6: ein Diagramm, in welchem beispielhaft zwei Differenzphasenkurven dargestellt sind;
- Fig. 7: einen vergrößerten Ausschnitt des Diagramms gemäß Fig. 6;
- Fig. 8: das Kraftfahrzeug gemäß Fig. 1 in einer weiteren Ausführungsform; und
- Fig. 9: das Kraftfahrzeug gemäß Fig. 8 in einer weiteren Ausführungsform.

In den Figuren werden gleiche oder funktionsgleiche Elemente mit den gleichen Bezugszeichen versehen.

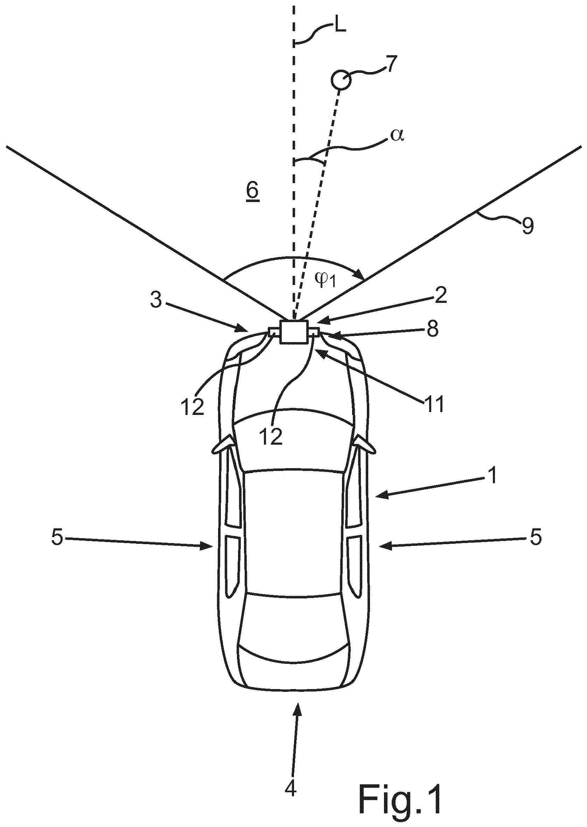

In Fig. 1 ist in einer schematischen Draufsichtdarstellung ein Kraftfahrzeug 1 mit einer Radarsensorvorrichtung 2 gezeigt. Die Radarsensorvorrichtung 2 ist in dem Ausführungsbeispiel in einem Frontbereich 3 des Kraftfahrzeugs 1 angeordnet. Die positionelle Anordnung der Radarsensorvorrichtung 2 ist lediglich beispielhaft zu verstehen. Es kann auch vorgesehen sein, dass die Radarsensorvorrichtung 2 an einem Heck 4 oder an einem Seitenbereich 5 des Kraftfahrzeugs 1 angeordnet ist. Ebenso kann es vorgesehen sein, dass an dem Kraftfahrzeug mehrere Radarsensorvorrichtungen 2 vorgesehen sind. Dies kann insbesondere dann besonders sinnvoll sein, wenn ein kompletter Umgebungsbereich 6 des Kraftfahrzeugs 1 erfasst werden soll.

Die Radarsensorvorrichtung 2 kann ein Objekt 7 in dem Umgebungsbereich 6 detektieren. Die Radarsensorvorrichtung 2 umfasst einen Radarsensor 8. Der Radarsensor 8 ist dazu ausgelegt, eine elektromagnetische Welle auszusenden und die von dem Objekt 7 reflektierte elektromagnetische Welle in einem vorbestimmten Sichtbereich 9 des Radarsensors 8 zu empfangen.

Der vorbestimmte Sichtbereich 9 erstreckt sich über einen azimutalen Erfassungswinkel ϕ1. Dieser azimutale Erfassungswinkel ϕ1 kann beispielsweise gemäß dem Ausführungsbeispiel durch die verlängerte Längsachse L des Kraftfahrzeugs 1 mittig geteilt sein. Somit wird die linke und die rechte Seite des Umgebungsbereichs 6 bezüglich der verlängerten Fahrzeuglängsachse L zu gleichen Maßen von dem Radarsensor 8 abgedeckt beziehungsweise erfasst. Der azimutale Erfassungswinkel ϕ1 kann beispielsweise 150°oder auch mehr betragen.

Der Radarsensor 8 kann beispielsweise als ein Dauerstrichradar bzw. als sogenannter CW Radar (Continuous Wave Radar) ausgebildet sein. Der Radarsensor 8 kann aber auch als ein FMCW Radar (Frequency Modulated Continuous Wave Radar) ausgebildet sein. Das FMCW Radar strahlt eine in ihrer Frequenz modulierte kontinuierliche elektromagnetische Welle aus. Mit einem solchen Radarsensor 8 gelingt es, die Entfernung des Objekts 7 sowie die relative Geschwindigkeit des Objekts 7 bezüglich des Kraftfahrzeugs 1 und einen Objektwinkel α zwischen den Kraftfahrzeug 1 und dem Objekt 7 zu bestimmen. Dieser Objektwinkel α erstreckt sich beispielsweise zwischen einer gedachten Verbindungslinie zwischen dem Kraftfahrzeug 1 und dem Objekt 7 und der verlängerten Fahrzeuglängsachse L. Ein Empfänger des Radarsensors 8 kann mindestens zwei Empfangspfade aufweisen, welche jeweils einen Abwärtsmischer, einen Verstärker und einen Analogdigitalwandler umfassen können. Die Erfindung ist jedoch nicht auf einen solchen Radarsensor 8 beschränkt.

Um das Objekt 7 zu detektieren, werden von einer Sendeantenne 16 des Radarsensors 8 elektromagnetische Wellen ausgesendet. Von dem Objekt 7 werden diese elektromagnetischen Wellen reflektiert. Diese reflektierten elektromagnetischen Wellen werden von einer Empfangsantenne 17 des Radarsensors 8 empfangen. Jedoch werden die ausgesandten elektromagnetischen Wellen bei dem in das Kraftfahrzeug 1 eingebauten Radarsensor 8 an anderen Teilen des Kraftfahrzeugs 1, insbesondere einem Chassis 18 und/oder einem Stoßfänger, reflektiert. Die Reflektion ist besonders stark bei Teilen, die aus Metall gefertigt sind und/oder eine glatte Oberfläche aufweisen. Die reflektierten elektromagnetischen Wellen können auch mehrfach reflektiert sein und dadurch auf die Empfangsantenne 17 gelenkt werden. Diese elektromagnetischen Wellen, welche außerhalb des vorbestimmten Sichtbereichs 9 auf die Empfangsantenne 17 einfallen, werden als Störwellen bezeichnet.

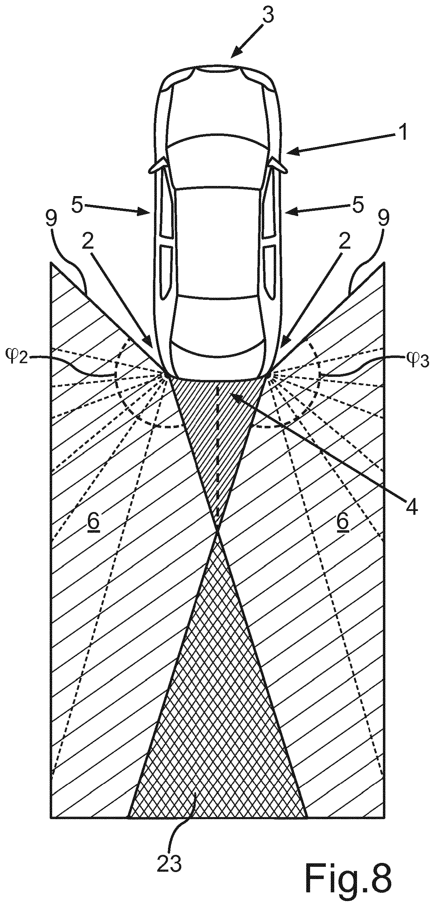

Fig. 8 zeigt das Kraftfahrzeug 1 in einer weiteren Ausführungsform. In diesem Fall sind zwei Radarsensorvorrichtung 2 an dem Heck 4 des Kraftfahrzeugs 1 angeordnet. Die Radarsensorvorrichtungen 2 sind analog zu der Radarsensorvorrichtung 2 gemäß Fig. 1 ausgebildet. Auch mit diesen Radarsensorvorrichtungen 2 kann ein Objekt im Umgebungsbereich 6 des Kraftfahrzeugs 1 erfasst werden. Die beiden Radarsensorvorrichtung 2 weisen jeweils einen Erfassungsbereich 9 auf. Die Radarsensorvorrichtung 2, die im linken Bereich des Hecks 4 angeordnet ist, weist einen azimutale Erfassungswinkel ϕ2 auf und die Radarsensorvorrichtung 2, die im rechten Bereich des Hecks 4 angeordnet ist, weist einen azimutale Erfassungswinkel ϕ3 auf. Die azimutalen Erfassungswinkel der ϕ2 und ϕ3 können beispielsweise größer oder gleich als 150°sein. Die Erfassungswinkel der ϕ2 und ϕ3 können insbesondere gleich sein. In dem vorliegenden Ausführungsbeispiel sind die beiden Radarsensorvorrichtungen 2 derart angeordnet, dass sich ihre Erfassungsbereiche 9 überschneiden. In dem Überscheidungsbereich 23 können Objekte mit beiden Radarsensorvorrichtungen 2 erfasst werden.

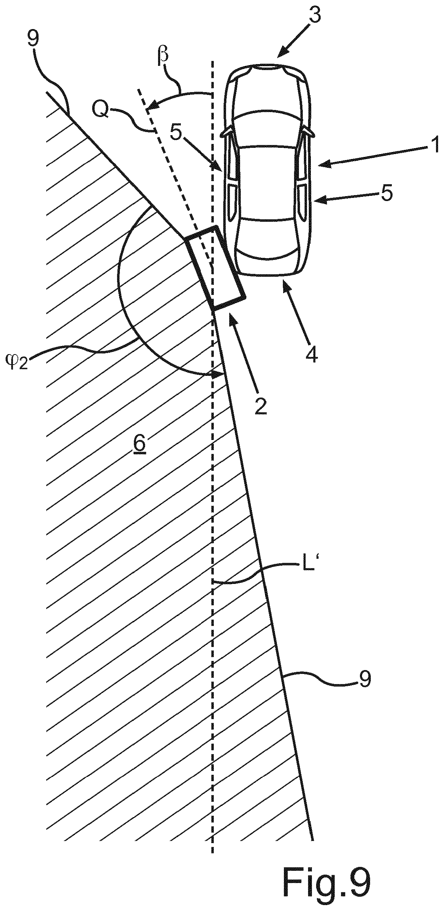

Fig. 9 zeigt eine weitere Darstellung des Kraftfahrzeugs 1 gemäß Fig. 8. Dabei ist die Positionierung der Radarsensorvorrichtungen 2 verdeutlicht. Vorliegend ist der Übersichtlichkeit halber nur die linke Radarsensorvorrichtung 2 gezeigt. Zudem ist diese Radarsensorvorrichtung 2 im Vergleich zum Kraftfahrzeug 1 vergrößert dargestellt. Es ist zu erkennen, dass die Radarsensorvorrichtung 2 gedreht zu der verschobenen Längsachse L' des Kraftfahrzeugs 1 angeordnet ist. Vorliegend schließen die die verschobene Längsachse L' und eine Querachse Q einen Winkel β ein. Durch die Wahl des Winkels β kann die Lange des Erfassungsbereichs 9 bzw. der azimutale Erfassungswinkel ϕ2 der Radarsensorvorrichtung bestimmt werden.

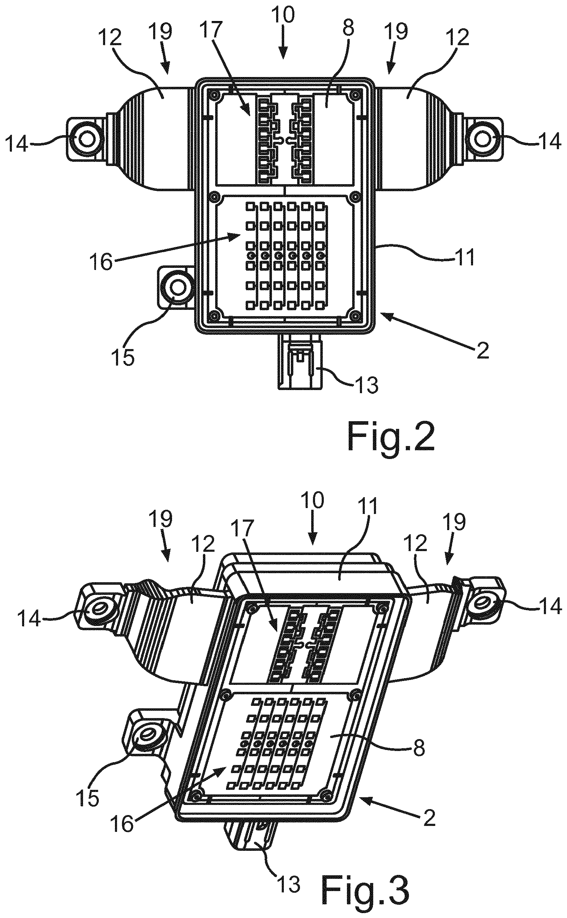

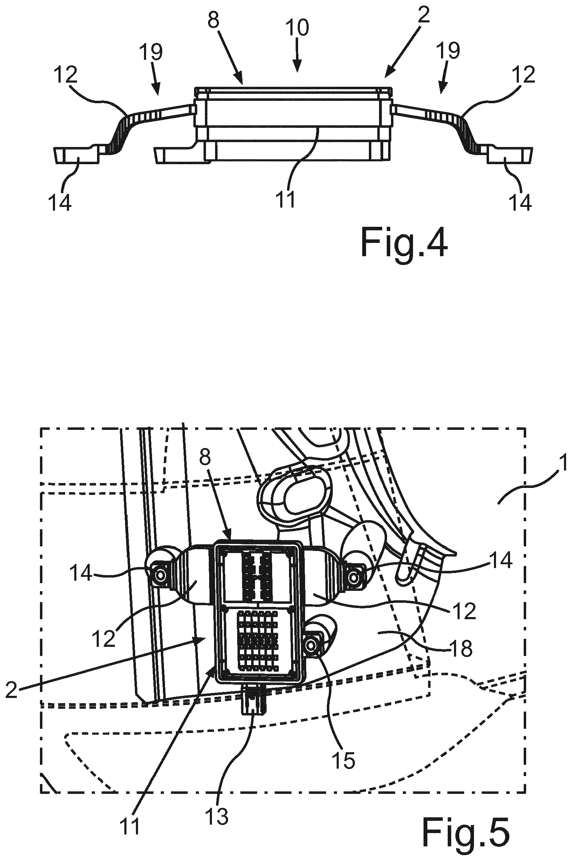

Damit die Störwellen von der Empfangsantenne 17 abgeschirmt werden können, wird eine Abschirmeinrichtung 12 bereitgestellt. Die Abschirmeinrichtung 12 ist vorliegend ein Teil eines Gehäuses 11 der Radarsensorvorrichtung 2. Eine Ausführungsform der Radarsensorvorrichtung 2 ist in den Fig. 2, 3 und 4 gezeigt. Dabei zeigt Fig. 2 eine Draufsicht der Radarsensorvorrichtung 2, Fig. 3 eine Perspektivansicht der Radarsensorvorrichtung 2 und Fig. 4 eine Seitenansicht der Radarsensorvorrichtung 2.

Ein erster Gehäusebereich 10 des Gehäuses 11 dient zur Aufnahme des Radarsensors 8. Das Gehäuse 11 ist in dem ersten Gehäusebereich 10 wannenförmig ausgebildet. Somit wird eine Aufnahme für den Radarsensor 8 bereitgestellt. In der Aufnahme können entsprechende Halteeinrichtungen zum Halten des Radarsensors 8 vorgesehen sein. Insbesondere weist das Gehäuse 11 einen hier nicht dargestellten Deckel als Radom auf, mit dem das Gehäuse 11 im ersten Gehäusebereich 10 abgedeckt werden kann. Ein zweiter Gehäusebereich 19 des Gehäuses 11 dient als Abschirmeinrichtung 12 zum Abschirmen von Störwellen von dem Radarsensor 8. Die Abschirmeinrichtung 12 umfasst im Wesentlichen zwei flügelförmige Elemente, die von dem ersten Gehäusebereich 10 abstehen. Diese Elemente sind in einem Bereich der Empfangsantenne 17 angeordnet. Es kann aber auch vorgesehen sein, dass sich die Abschirmeinrichtung 12 über die gesamte Länge einer Seite des Gehäuses 11 in dem ersten Gehäusebereich 10 erstreckt. Die Abschirmeinrichtung 12 bzw. die flügelförmigen Elemente liegen in der Ebene der Empfangsantennen 17. Mit anderen Worten erstreckt sich die Abschirmeinrichtung 12 im Wesentlichen entlang einer Haupterstreckungsrichtung des Radarsensors 8. Die Haupterstreckungsrichtung ist in diesem Fall die Ebene, welche durch die Platine beziehungsweise das Trägerelement der Empfangsantennen 17 definiert ist.

Aus der Zusammenschau von Fig. 2 bis Fig. 4 ist zu erkennen, dass sich die beiden flügelförmigen Elemente der Abschirmeinrichtung 12 ausgehend von dem ersten Gehäusebereich 10 im Wesentlichen entlang der Haupterstreckungsrichtung des Radarsensors 8 erstrecken. Zudem weisen die Elemente eine Krümmung auf. Besonders gut lässt sich die Krümmung der Abschirmeinrichtung 12 in Fig. 4 erkennen. In einem dem ersten Gehäusebereich 10 gegenüberliegenden Bereich verlaufen die Elemente im Wesentlichen wieder entlang der Haupterstreckungsrichtung des Radarsensors 8. Zudem verjüngt sich die Querschnittsfläche der Elemente der Abschirmeinrichtung 12 ausgehend von dem ersten Gehäusebereich 10.

Die Abschirmeinrichtung 12 ist so ausgelegt, dass die Störwellen von den Empfangsantennen 17 weg gelenkt werden. Die Abschirmeinrichtung 12 ist so geformt, dass ein Normalenvektor auf jeder Stelle der Oberfläche der Abschirmeinrichtung 12 von dem Radarsensor 8 und insbesondere der Empfangsantennen 17 weg zeigt. Somit werden die Störwellen an der Abschirmeinrichtung derart reflektiert, dass diesen nicht auf den Radarsensor 8 treffen. Die flügelförmigen Elemente der Abschirmeinrichtung 12 können beispielsweise eine Länge aufweisen, die zwischen 5 cm und 10 cm beträgt.

Zudem umfasst die Abschirmeinrichtung 12 zwei Befestigungselemente 14, die jeweils als Lasche ausgebildet sind. In den Laschen ist jeweils eine Bohrung vorgesehen. Mit entsprechenden Befestigungsmitteln, beispielweise Schrauben, kann somit die Radarsensorvorrichtung 2 an dem Kraftfahrzeug 1 befestigt werden. Zudem ist ein weiteres Befestigungselement 15 vorgesehen sein, welches an einer anderen Stelle des Gehäuses 11 angeordnet ist. Die Anordnung der Befestigungselemente 14, 15 ist beliebig, vorzugsweise jedoch so, dass das Gehäuse 11 optimal an dem Kraftfahrzeug 1 befestigt werden kann. Weiterhin kann die Radarsensorvorrichtung 2 eine Schnittstelle 13 für den Anschluss einer Stromversorgung und/oder einer Datenleitung umfassen.

Die Abschirmeinrichtung 12 und das komplette Gehäuse 11 sind aus einem Material gebildet, welches die elektromagnetischen Wellen absorbiert. Materialien welche elektromagnetische Wellen von Radarsensoren teilweise oder vollständig absorbieren sind auch unter der Bezeichnung Radar Absorbent Material (RAM) bekannt. Das Gehäuse kann beispielsweise aus einem mit Kohlenstoff gefüllten Kunststoff gefertigt sein. Alternativ oder ergänzend können beispielsweise Ferrit, Graphit oder Schichten aus radarabsorbierenden Materialien in eine Polymermatrix eines Faser-Kunststoff-Verbunds gemischt werden. Mit der Abschirmeinrichtung 12 bzw. dem Gehäuse 11 können somit Störwellen abgelenkt werden beziehungsweise von der Empfangsantenne 17 weg gelenkt werden und/oder von der Abschirmeinrichtung 12 absorbiert werden.

Fig. 5 zeigt die Radarsensorvorrichtung 2 in einem bestimmungsgemäßen Einbauzustand in dem Kraftfahrzeug 1. Hierbei ist die Radarsensorvorrichtung 2 an dem Chassis 18 des Kraftfahrzeugs 1 angeordnet. Die Anordnung erfolgt derart, dass die Radarsensorvorrichtung 2 mittels des Befestigungselements 14 und des weiteren Befestigungselements 15 an dem Kraftfahrzeug 1 befestigt ist. Vorliegend ist die Radarsensorvorrichtung 2 an Schraubdome des Chassis 18 angebracht und somit verdeckt hinter dem Stoßfänger des Kraftfahrzeugs 1 angeordnet.

Weiterhin kann es vorgesehen sein, dass für jeweils einen Typ des Kraftfahrzeugs 1 das jeweilige angepasste Gehäuse 11 mit entsprechenden Befestigungselementen 14 gefertigt wird. Dies erspart während der Fertigung des Kraftfahrzeugs 1 ein zusätzliches Anbringen von Absorptions- beziehungsweise Ablenkelementen, wie beispielsweise einem Absorber Shield. Darüber hinaus wird eine Montage der Radarsensorvorrichtung 2 in das Kraftfahrzeug 1 vereinfacht.

Der Radarsensor 8 nutzt zur Bestimmung einer relativen Position zwischen dem Kraftfahrzeug 1 und dem Objekt 7 beziehungsweise zur azimutalen Winkelbestimmung des Objekts 7 beziehungsweise um den Objektwinkel α zu bestimmen, die Differenzphase von dem jeweiligen Empfangssignalen die von zwei Empfangsantennen 17 des Radarsensors 8 bereitgestellt werden. Die beiden Empfangsantennen 17 weisen dabei einen definierten Abstand in azimutaler Richtung auf. Zur präzisen Bestimmung des Objektwinkels α ist ein stetig ansteigender Verlauf der Differenzphase 19 notwendig.

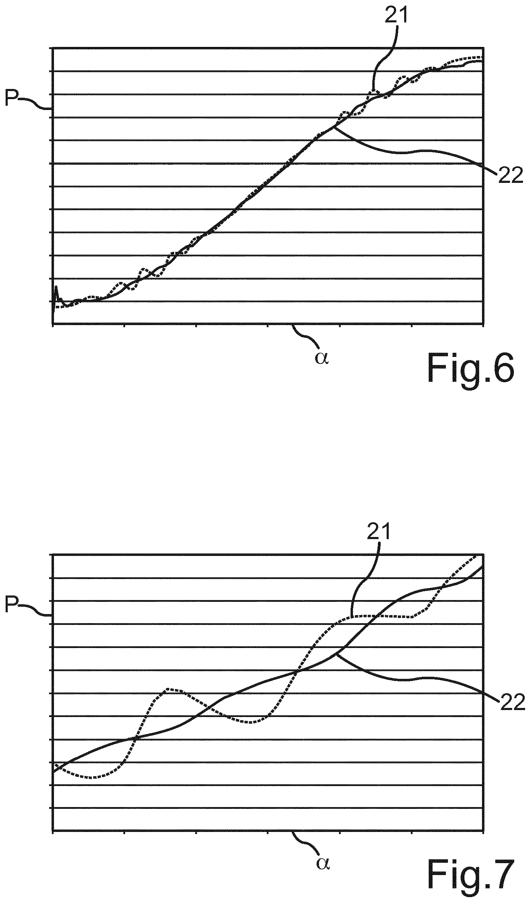

Fig. 6 zeigt ein Diagramm, welches die Differenzphasenkurven 21 und 22 zeigt. Fig. 7 zeigt einen Teilbereich des Diagramms gemäß Fig. 6 in einer vergrößerten Ansicht. Auf der Abszisse ist der Objektwinkel α aufgetragen, während auf der Ordinate die Phasendifferenz P aufgetragen ist. Die Differenzphasenkurve 21 zeigt ein Empfangssignal der Empfangsantennen eines Radarsensors ohne Abschirmeinrichtung. Die Differenzphasenkurve 22 zeigt ein Empfangssignal der Empfangsantennen 17 der Radarsensorvorrichtung 2, welche die oben beschriebene Abschirmeinrichtung 12 umfasst. In Folge der Störwellen, die wie erwähnt durch Mehrfachreflektionen an dem metallischen Chassis 18 auftreten können, weist die Differenzphasenkurve 21 sogenannte Rippel auf. Durch die Rippel ist eine eindeutige Bestimmung des Objektwinkels α nicht mehr möglich, da die Differenzphasenkurve 21 keinen stetig ansteigenden Verlauf aufweist. Wird nun der Objektwinkel α mit einer

Radarsensorvorrichtung 2 ermittelt, bei der die Störwellen mittels der Abschirmeinrichtung 12 von dem Radarsensor 8 abgeschirmt werden, ergibt sich die Differenzphasenkurve 22. Diese Differenzphasenkurve 22 weist im Vergleich zu der Differenzphasenkurve 21 keine Wendepunkte und somit einen im Wesentlichen stetigen Verlauf auf. Die Bestimmung des Objektwinkels α ist somit eindeutig durchführbar.

## Patentansprüche

1. Radarsensorvorrichtung (2) für ein Kraftfahrzeug (1) zur Detektion von einem Objekt (7) in einem Umgebungsbereich (6) des Kraftfahrzeuges (1) mit einem Radarsensor (8), welcher dazu ausgelegt ist, zur Detektion des Objekts (7) eine elektromagnetische Welle auszusenden und die von dem Objekt (7) reflektierte elektromagnetische Welle in einem vorbestimmten Sichtbereich (9) des Radarsensors (8) zu empfangen, mit einem Gehäuse (11), in welchem der Radarsensor (8) zumindest bereichsweise angeordnet ist und mit einer Abschirmeinrichtung (12), welche dazu ausgelegt ist, Störwellen, welche durch die reflektierten elektromagnetischen Wellen außerhalb des vorbestimmten Sichtbereichs (9) gebildet sind, von dem Radarsensor (8) abzuschirmen, wobei die Abschirmeinrichtung (12) eine vorbestimmte Krümmung aufweist, so dass die Abschirmeinrichtung (12) derart geformt ist, dass diese die Störwellen, welche auf die Abschirmeinrichtung (12) treffen, von dem Radarsensor (8) weg lenkt,
wobei das Gehäuse (11) einen ersten Gehäusebereich (10) zum Aufnehmen des Radarsensors (8) und einen zweiten Gehäusebereich (19), der die Abschirmeinrichtung (12) bildet, aufweist, **dadurch gekennzeichnet, dass** das Gehäuse (11) einteilig ausgebildet ist, die Abschirmeinrichtung (12) einteilig mit dem Gehäuse ausgebildet ist und einen Teil des Gehäuses (11) bildet, dass das komplette Gehäuse (11) aus einem Material gebildet ist, welches die elektromagnetischen Wellen absorbiert,
dass die Abschirmeinrichtung (12) zwei flügelförmige Elemente sind, die von dem ersten Gehäusebereich (10) abstehen, dass der zweite Gehäusebereich (19) als ein Befestigungselement (14) zur Befestigung der Radarsensorvorrichtung (2) an dem Kraftfahrzeug (1) ausgebildet ist, und dass das Befestigungselement (14) Befestigungslaschen umfasst, die als Verlängerung der flügelförmigen Elemente der Abschirmeinrichtung (12) ausgebildet sind.

2. Radarsensorvorrichtung (2) nach Anspruch 1,
**dadurch gekennzeichnet, dass**
sich der zweite Gehäusebereich (19) im Wesentlichen entlang einer Haupterstreckungsrichtung des Radarsensors (8) erstreckt.

3. Radarsensorvorrichtung (2) nach einem der vorhergehenden Ansprüche,
**dadurch gekennzeichnet, dass**
die Abschirmeinrichtung (12) derart zu dem Radarsensor (8) positioniert ist, dass diese die Störwellen, welche auf die Abschirmeinrichtung (12) treffen, von dem Radarsensor (8) weg lenkt.

4. Radarsensorvorrichtung (2) nach Anspruch 1,
**dadurch gekennzeichnet, dass**
die Abschirmeinrichtung (12) dazu ausgelegt ist, die Störwellen, welche auf die Abschirmeinrichtung (12) treffen, zu absorbieren.

5. Radarsensorvorrichtung (2) nach Anspruch 4,
**dadurch gekennzeichnet, dass**
die Abschirmeinrichtung (12) bzw. das Gehäuse (11) aus einem mit Kohlenstoff gefüllten Kunststoff gebildet ist.

6. Radarsensorvorrichtung (2) nach einem der vorhergehenden Ansprüche,
**dadurch gekennzeichnet, dass**
die Radarsensorvorrichtung (2) dazu ausgelegt ist, eine relative Position zwischen dem Kraftfahrzeug (1) und dem Objekt (7) anhand der von dem Objekt (7) reflektierten elektromagnetischen Welle zu bestimmen.

7. Radarsensorvorrichtung (2) nach einem der vorhergehenden Ansprüche,
**dadurch gekennzeichnet, dass**
der Radarsensor (8) zumindest eine Sendeantenne (16) zum Senden der elektromagnetischen Welle und zumindest eine Empfangsantenne (17) zum Empfangen der von dem Objekt (7) reflektierten elektromagnetischen Welle umfasst.

8. Radarsensorvorrichtung (2) nach Anspruch 7,
**dadurch gekennzeichnet, dass**
die Abschirmeinrichtung (12) derart ausgelegt ist, dass die zumindest eine Empfangsantenne (17) durch die Abschirmeinrichtung (12) von den Störwellen abgeschirmt ist.

9. Radarsensorvorrichtung (2) nach Anspruch 8, **dadurch gekennzeichnet, dass** die Abschirmeinrichtung (12) derart ausgelegt ist, dass ausschließlich die Empfangsantenne (17) durch die Abschirmeinrichtung von den Störwellen abgeschirmt ist.

10. Radarsensorvorrichtung (2) nach einem der Ansprüche 7 bis 9, **dadurch gekennzeichnet, dass** die flügelförmigen Elemente nur in einem Bereich der Empfangsantenne (17) angeordnet sind.

11. Radarsensorvorrichtung (2) nach einem der vorhergehenden Ansprüche, **dadurch gekennzeichnet, dass** das Gehäuse (11) mittels eines Spritzgussverfahrens hergestellt ist.

12. Radarsensorvorrichtung (2) nach einem der vorhergehenden Ansprüche, **dadurch gekennzeichnet, dass** sich die Querschnittsfläche der flügelförmigen Elemente der Abschirmeinrichtung (12) ausgehend von dem ersten Gehäusebereich (10) verjüngt.

13. Radarsensorvorrichtung (2) nach einem der vorhergehenden Ansprüche, **dadurch gekennzeichnet, dass** in den Befestigungslaschen jeweils eine Bohrung vorgesehen ist, wobei mit entsprechenden Befestigungsmitteln somit die Radarsensorvorrichtung (2) an dem Kraftfahrzeug (1) befestigt werden kann.

14. Fahrerassistenzsystem mit einer Radarsensorvorrichtung (2) nach einem der vorhergehenden Ansprüche.

15. Kraftfahrzeug (1) mit einem Fahrerassistenzsystem nach Anspruch 4.

16. Kraftfahrzeug (1) nach Anspruch 5, **dadurch gekennzeichnet, dass** die Radarsensorvorrichtung (2) an einem Chassis (18) des Kraftfahrzeuges (1) angeordnet ist.

## Claims

1. Radar sensor apparatus (2) for a motor vehicle (1) for detecting an object (7) in a surrounding area (6) of the motor vehicle (1) with a radar sensor (8), which, for detecting the object (7), is designed to emit an electromagnetic wave and to receive the electromagnetic wave reflected by the object (7) in a predetermined field of view (9) of the radar sensor (8), with a housing (11), in which the radar sensor (8) is at least regionally arranged, and with a shielding device (12), which is designed to shield the radar sensor (8) against disturbing waves formed by the reflected electromagnetic waves outside the predetermined field of vision (9), wherein the shielding device (12) has a predetermined curvature, with the result that the shielding device (12) is shaped such that it diverts the disturbing waves incident on the shielding device (12) away from the radar sensor (8), wherein the housing (11) has a first housing region (10) for accommodating the radar sensor (8) and a second housing region (19) forming the shielding device (12), **characterized in that** the housing (11) is formed in one piece, the shielding device (12) is formed in one piece with the housing and forms part of the housing (11), **in that** the entire housing (11) is formed from a material that absorbs the electromagnetic waves, **in that** the shielding device (12) is two wing-type elements projecting from the first housing region (10), **in that** the second housing region (19) is formed as an attachment element (14) for attaching the radar sensor apparatus (2) to the motor vehicle (1), and **in that** the attachment element (14) comprises attachment tabs formed as an extension of the wing-type elements of the shielding device (12).

2. Radar sensor apparatus (2) according to Claim 1, **characterized in that** the second housing region (19) extends substantially along a main direction of extent of the radar sensor (8).

3. Radar sensor apparatus (2) according to either of the preceding claims, **characterized in that** the shielding device (12) is positioned relative to the radar sensor (8) in a manner such that it diverts the disturbing waves incident on the shielding device (12) away from the radar sensor (8).

4. Radar sensor apparatus (2) according to Claim 1, **characterized in that** the shielding device (12) is designed to absorb the disturbing waves incident on the shielding device (12).

5. Radar sensor apparatus (2) according to Claim 4, **characterized in that** the shielding device (12) or the housing (11) is formed from a carbon-filled plastic.

6. Radar sensor apparatus (2) according to one of the preceding claims, **characterized in that** the radar sensor apparatus (2) is designed to determine a relative position between the motor vehicle (1) and the object (7) by using the electromagnetic wave reflected by the object (7) .

7. Radar sensor apparatus (2) according to one of the preceding claims, **characterized in that** the radar sensor (8) comprises at least one transmission antenna (16) for transmitting the electromagnetic wave and at least one reception antenna (17) for receiving the electromagnetic wave reflected by the object (7).

8. Radar sensor apparatus (2) according to Claim 7, **characterized in that** the shielding device (12) is designed such that the at least one reception antenna (17) is shielded against the disturbing waves by the shielding device (12).

9. Radar sensor apparatus (2) according to Claim 8, **characterized in that** the shielding device (12) is designed such that only the reception antenna (17) is shielded against the disturbing waves by the shielding device.

10. Radar sensor apparatus (2) according to one of Claims 7 to 9, **characterized in that** the wing-type elements are arranged only in one region of the reception antenna (17).

11. Radar sensor apparatus (2) according to one of the preceding claims, **characterized in that** the housing (11) is produced by means of an injection moulding method.

12. Radar sensor apparatus (2) according to one of the preceding claims, **characterized in that** the cross-sectional area of the wing-type elements of the shielding device (12) tapers starting from the first housing region (10) .

13. Radar sensor apparatus (2) according to one of the preceding claims, **characterized in that** in each case a hole is provided in the attachment tabs, wherein the radar sensor apparatus (2) can in this way be attached to the motor vehicle (1) using corresponding attachment means.

14. Driver assistance system having a radar sensor apparatus (2) according to one of the preceding claims.

15. Motor vehicle (1) having a driver assistance system according to Claim 14.

16. Motor vehicle (1) according to Claim 15, **characterized in that** the radar sensor apparatus (2) is arranged on a chassis (18) of the motor vehicle (1).

## Revendications

1. Dispositif de capteur radar (2) pour un véhicule automobile (1) destiné à détecter un objet (7) dans une zone environnante (6) du véhicule automobile (1), comprenant un capteur radar (8) qui est conçu pour émettre une onde électromagnétique pour détecter l'objet (7) et pour recevoir l'onde électromagnétique réfléchie par l'objet (7) dans un champ de vision prédéterminé (9) du capteur radar (8), comprenant un boîtier (11) dans lequel est disposé le capteur radar (8) au moins par endroits, et comprenant un dispositif de blindage (12) qui est conçu pour protéger le capteur radar (8) des ondes parasites qui sont formées par les ondes électromagnétiques réfléchies en dehors du champ de vision prédéterminé (9), le dispositif de blindage (12) présentant une courbure prédéterminée de sorte que le dispositif de blindage (12) est formé de telle sorte qu'il écarte du capteur radar (8) les ondes parasites qui sont incidentes sur le dispositif de blindage (12), le boîtier (11) présentant une première zone de boîtier (10) destinée à recevoir le capteur radar (8) et une deuxième zone de boîtier (19) qui constitue le dispositif de blindage (12),
**caractérisé en ce que** le boîtier (11) est réalisé d'un seul tenant, le dispositif de blindage (12) est réalisé d'un seul tenant avec le boîtier et fait partie du boîtier (11), **en ce que** le boîtier (11) tout entier est formé d'un matériau qui absorbe les ondes électromagnétiques, **en ce que** le dispositif de blindage (12) correspond à deux éléments en forme d'aile qui font saillie à partir de la première zone de boîtier (10), **en ce que** la deuxième zone de boîtier (19) est réalisée sous la forme d'un élément de fixation (14) destiné à fixer le dispositif de capteur radar (2) au véhicule automobile (1), et **en ce que** l'élément de fixation (14) comprend des pattes de fixation qui sont réalisées sous la forme d'un prolongement des éléments en forme d'aile du dispositif de blindage (12).

2. Dispositif de capteur radar (2) selon la revendication 1, **caractérisé en ce que** la deuxième zone de boîtier (19) s'étend substantiellement le long d'une direction d'extension principale du capteur radar (8).

3. Dispositif de capteur radar (2) selon l'une quelconque des revendications précédentes, **caractérisé en ce que** le dispositif de blindage (12) est positionné par rapport au capteur radar (8) de telle sorte qu'il écarte du capteur radar (8) les ondes parasites qui sont incidentes sur le dispositif de blindage (12).

4. Dispositif de capteur radar (2) selon la revendication 1, **caractérisé en ce que** le dispositif de blindage (12) est conçu pour absorber les ondes parasites qui sont incidentes sur le dispositif de blindage (12).

5. Dispositif de capteur radar (2) selon la revendication 4, **caractérisé en ce que** le dispositif de blindage (12) ou le boîtier (11) est formé en matière plastique chargée en carbone.

6. Dispositif de capteur radar (2) selon l'une quelconque des revendications précédentes, **caractérisé en ce que** le dispositif de capteur radar (2) est conçu pour déterminer une position relative entre le véhicule automobile (1) et l'objet (7) à l'aide de l'onde électromagnétique réfléchi par l'objet (7).

7. Dispositif de capteur radar (2) selon l'une quelconque des revendications précédentes, **caractérisé en ce que** le capteur radar (8) comprend au moins une antenne d'émission (16) destinée à émettre l'onde électromagnétique et au moins une antenne de réception (17) destinée à recevoir l'onde électromagnétique réfléchie par l'objet (7).

8. Dispositif de capteur radar (2) selon la revendication 7, **caractérisé en ce que** le dispositif de blindage (12) est conçu de telle sorte que ladite au moins une antenne de réception (17) est protégée des ondes parasites par le dispositif de blindage (12).

9. Dispositif de capteur radar (2) selon la revendication 8, **caractérisé en ce que** le dispositif de blindage (12) est conçu de telle sorte que seule l'antenne de réception (17) est protégée des ondes parasites par le dispositif de blindage.

10. Dispositif de capteur radar (2) selon l'une quelconque des revendications 7 à 9, **caractérisé en ce que** les éléments en forme d'aile ne sont disposés que dans une zone de l'antenne de réception (17).

11. Dispositif de capteur radar (2) selon l'une quelconque des revendications précédentes, **caractérisé en ce que** le boîtier (11) est fabriqué au moyen d'un procédé de moulage par injection.

12. Dispositif de capteur radar (2) selon l'une quelconque des revendications précédentes, **caractérisé en ce que** la superficie de la section des éléments en forme d'aile du dispositif de blindage (12) s'amincit en partant de la première zone de boîtier (10).

13. Dispositif de capteur radar (2) selon l'une quelconque des revendications précédentes, **caractérisé en ce que** dans les pattes de fixation, respectivement un perçage est prévu, des moyens de fixation correspondants permettant ainsi de fixer le dispositif de capteur radar (2) au véhicule automobile (1).

14. Système d'assistance au conducteur comprenant un dispositif de capteur radar (2) selon l'une quelconque des revendications précédentes.

15. Véhicule automobile (1) comprenant un système d'assistance au conducteur selon la revendication 14.

16. Véhicule automobile (1) selon la revendication 15, **caractérisé en ce que** le dispositif de capteur radar (2) est disposé sur un châssis (18) du véhicule automobile (1).
